# EUROPÄISCHE PATENTANMELDUNG

(11) **EP 4 345 547 A1**
(43) Veröffentlichungstag der Anmeldung: **03.04.2024**
(21) Anmeldenummer: 22199171.4
(22) Anmeldetag: 30.09.2022
(51) Int. Cl.: G05B 17/02, G05B 19/418

(54) **VERFAHREN FÜR EINE COMPUTER-GESTÜTZTE INSTALLATION VON RÄUMLICH DEZENTRAL ANGEORDNETEN, ELEKTRISCHEN KOMPONENTEN EINER MASCHINE**

(71) Anmelder: Murrelektronik GmbH, 71570 Oppenweiler (DE)
(72) Erfinder: Dr.-Ing. ZELLER, Paul, 74223 Flein (DE); PFESTORF, Sebastian, 76137 Karlsruhe (DE)
(74) Vertreter: Goebel, Sebastian

(57) **Zusammenfassung**

Die Erfindung betrifft ein Verfahren (100) für eine computer-gestützte Installation von räumlich dezentral angeordneten, elektrischen Komponenten (4) einer Maschine (1), insbesondere einer Anlage (1), umfassend: Bereitstellen (101) einer Installationsvorgabe (200), insbesondere einer Anlagenspezifikation der Maschine (1), welche eine Zuordnung eines Installationselements (10), vorzugsweise eines Kabels und/oder eines Bauteils, sowie einer elektrischen Komponente (4), vorzugsweise in der Form eines Verbindungsmoduls (4) zur Verbindung mit dem Installationselement (10) und weiteren Installationselementen (10), für die Installation und deren Funktionalität spezifiziert; Identifizieren (102) einer Installationsvariante der Installation basierend auf der bereitgestellten Installationsvorgabe (200); und Simulieren (103) der identifizierten Installationsvariante hinsichtlich eines Einflusses auf die spezifizierte Funktionalität, wodurch ein Ergebnis der Simulation hinsichtlich einer Funktionsfähigkeit der identifizierten Installationsvariante bereitgestellt wird.

## Beschreibung

Die vorliegende Erfindung betrifft allgemein das Gebiet der Planung und Montage von Maschinen wie Automatisierungsanlagen, und insbesondere eine computer-gestützte Installation von räumlich dezentral angeordneten, elektrischen Komponenten einer Maschine.

### Hintergrund

Die Komplexität und Vielfalt von Automatisierungsanlagen, die entwickelt, geplant, installiert, gewartet, und repariert werden müssen, wird immer größer. In allen Phasen des Lebenszyklus einer solchen Anlage wie der Entwicklung/Planung, Produktion, Inbetriebsetzung, Betrieb und Wartung wird eine effiziente und effektive Unterstützung für einen Installateur oder Planer durch eine umfangreiche und vor allem vollständige Dokumentation immer wichtiger. Diesem Anspruch wird die in der Praxis vorliegende Dokumentation, beispielsweise in Form von Schaltplänen, allerdings nicht immer gerecht, da durch schlecht aufeinander abgestimmte Arbeitsprozesse oder durch die Verwendung von schlecht aufeinander abgestimmten Dokumentationstools Installationsaktivitäten nicht ausreichend oder nicht vollständig eingetragen werden. Diese bekannten Umstände führen zwangsläufig zu Dokumentationslücken in der Anlagendokumentation, was eine zuverlässige Wartung oder Reparatur einer Anlage erschwert bzw. im schlimmsten Fall unmöglich macht.

Es ist daher eine Aufgabe, die der Erfindung zugrunde liegt, ein computer-gestütztes Verfahren und ein System bereitzustellen, um eine einfachere, schnellere und sichere Installation von elektrischen Komponenten zu ermöglichen und dabei die oben genannten Nachteile des Standes der Technik zumindest teilweise zu überwinden.

### Zusammenfassung der Erfindung

Die voranstehende Aufgabe wird gelöst durch ein Verfahren, System, Computerprogramm sowie eine Vorrichtung zur Datenverarbeitung gemäß den unabhängigen Patentansprüchen.

Weitere Merkmale und Details der Erfindung ergeben sich aus den jeweiligen Unteransprüchen, der Beschreibung und den Zeichnungen.

Gegenstand der Erfindung ist insbesondere ein Verfahren für eine computer-gestützte, insbesondere elektrische, Installation von räumlich dezentral angeordneten und/oder elektrischen Komponenten einer Maschine, insbesondere einer Anlage.

Die Maschine kann als wenigstens eine der nachfolgend genannten Maschinen ausgebildet sein:
- Eine Automatisierungsanlage,
- Eine Produktionsanlage,
- Eine Logistikanlage,
- Eine Produktionsstraße,
- Ein Bearbeitungszentrum,
- Ein Industrieroboter,
- Eine Fertigungsanlage,
- Ein Aggregat,
- Ein Elektrogerät.

Insbesondere kann die Maschine dabei als eine Maschine mit modularem Charakter oder auch als mobile oder bewegliche Maschine ausgebildet sein, bei welcher einzelne Teile der Maschine modular gemäß einer Installationsvorgabe installiert werden. Diese Installation erfolgt zumindest teilweise manuell durch einen Benutzer wie einen Werker.

Die elektrischen Komponenten können Verbindungsmodule umfassen, welche eine dezentrale und modulare Verbindung von Installationselementen ermöglichen. Dezentral kann sich dabei darauf beziehen, dass die Verbindungsmodule zumindest teilweise einen zentralen Schaltschrank ersetzen, indem die Verbindungsmodule zwar jeweils nur einen Teil der Verbindungen für die Maschine bereitstellen, diese Verbindungen aber dezentral im Feld ermöglichen. Bei einer zentralen Topologie, also bspw. einem zentralisierten Schaltschrankkonzept, wird insbesondere von einer Punkt-zu-Punkt-Verbindung gesprochen, d.h. der Startpunkt, die Verbindung und der Endpunkt sind klar definiert. Im Gegensatz dazu ist es bei dezentralen Anwendungen möglich, bzw. kann sogar oftmals notwendig sein, zwischen dem Startpunkt und dem Endpunkt mehrere Komponenten anzuordnen oder zu verbinden. In diesem Fall kann z. B. von einer Modul-Modul oder Modul-Hub-Punkt-Verbindung gesprochen werden. Grundsätzlich können bei einer Maschine bspw. die folgenden Komponenten vorgesehen sein: Geräte wie Aktoren und/oder Sensoren, die Verbindungsmodule, Installationselemente, bspw. zur Verkabelung.

Das erfindungsgemäße Verfahren kann dabei die nachfolgenden Schritte umfassen, welche vorzugsweise nacheinander oder in beliebiger Reihenfolge ausgeführt werden, wobei die Schritte auch automatisiert und/oder wiederholt ausgeführt werden können:
- Bereitstellen einer Installationsvorgabe, insbesondere einer Anlagenspezifikation der Maschine, welche eine Zuordnung eines Installationselements, vorzugsweise eines Kabels und/oder eines Bauteils, sowie einer elektrischen Komponente, vorzugsweise in der Form eines Verbindungsmoduls zur Verbindung mit dem Installationselement und weiteren Installationselementen, für die Installation und deren Funktionalität spezifiziert,
- Identifizieren einer Installationsvariante der Installation basierend auf der bereitgestellten Installationsvorgabe,
- Simulieren der identifizierten Installationsvariante hinsichtlich eines Einflusses auf die spezifizierte Funktionalität, wodurch ein Ergebnis der Simulation hinsichtlich einer Funktionsfähigkeit der identifizierten Installationsvariante bereitgestellt wird.

Dies ermöglicht eine Überprüfung und ggf. Dokumentation von Planabweichungen in der Form der Installationsvariante. Insbesondere kann auf diese Weise ein Unterstützungssystem zur elektrischen Installation, vorzugsweise Verkabelung, von Maschinen mit modularem Charakter bereitgestellt werden, welches eine einfachere, schnellere und fehlerfreiere Installation ermöglicht. Diese Optimierung kann dadurch erreicht werden, dass die Auswirkungen von alternativen Installationsvarianten simuliert und ggf. ausgegeben werden. Dabei kann optional durch das Simulieren neben der Ausgabe der Auswirkungen auch bei negativem Ergebnis, d.h. mangelhafte Funktionsfähigkeit, eine zielführende Installationsvariante vorgeschlagen werden.

Unterschiedliche Installationsvarianten können bspw. dadurch auftreten, dass bei der Installation eine von der Installationsvorgabe abweichende Materialauswahl, z.B. falsche Kabellängen, unterschiedliche Module und/oder Topografie verwendet werden. Auch ist es möglich, dass die unterschiedliche Installationsvariante deshalb auftritt, da die Erfahrungswerte des Benutzers von der Installationsvorgabe abweichen und/oder eine fehlerhafte Ausführung der Installation erfolgt ist.

Um die Installationsvariante zu identifizieren, kann bspw. eine Eingabe des Benutzers ausgewertet werden und/oder eine automatische Prüfung der Installation erfolgen, z. B. durch eine Verbindungsprüfung zwischen Installationselementen wie Kabeln und den Komponenten wie Verbindungsmodulen. Damit kann eine alternative und ggf. falsche Komponentenauswahl und/oder ein alternativer und ggf. falscher Verlegeweg und/oder eine alternative und ggf. falsche Belegung von Anschlussstellen der Verbindungsmodule erkannt werden. Es lassen sich dabei bspw. alle Aktoren und/oder Sensoren und/oder Module so bei der Maschine ansteuern, dass die gewählte Installationsvariante identifiziert und in das System übertragen werden kann. Das Identifizieren ist z. B. durch eine Erkennungseinheit möglich, welche Installationsvarianten erkennt, die durch eine alternative Komponentenauswahl und/oder einen alternativen Verlegewert und/oder eine alternative Belegung von Anschlussstellen gekennzeichnet ist.

Durch das Simulieren ist es möglich sein, festzustellen, ob es sich bei der Installationsvariante um eine echte Alternative handelt, die keinen Einfluss auf die Funktionsweise und auf zukünftigen Ausbaustufen hat. Auch kann durch das Simulieren festgestellt werden, ob es sich bei der Installationsvariante um eine Alternative handelt, die keinen Einfluss auf die Funktionsweise aber auf zukünftige Ausbaustufen hat. Auch kann durch das Simulieren festgestellt werden, ob es sich bei der Installationsvariante um einen Fehler handelt, der Einfluss auf die Funktionsweise und auf zukünftige Ausbaustufen hat.

Ein Benutzer kann bspw. ein Installateur und/oder Anlagenmechaniker und/oder Elektriker und/oder Werker und/oder Planer und/oder mechanischer Konstrukteur oder Entwickler und/oder elektrischer Konstrukteur oder Entwickler und/oder SPS-Programmierer und/oder Inbetriebnehmer und/oder Instandhalter und/oder Maschinenführer sein. Es ist möglich, dass der Benutzer das erfindungsgemäße Verfahren dadurch verwendet, dass das Verfahren über einen Computer für den Benutzer bereitgestellt wird. Hierzu kann ein Computerprogramm zumindest teilweise durch den Computer und/oder einen weiteren Computer ausgeführt werden, um die erfindungsgemäßen Verfahrensschritte durchzuführen.

Ferner ist es möglich, dass mehrere Benutzer simultan oder zumindest teilweise gleichzeitig das erfindungsgemäße Verfahren anwenden. Entsprechend können die Schritte eines erfindungsgemäßen Verfahrens auch mehrfach und/oder zumindest teilweise zeitlich parallel durchgeführt werden. Bspw. werden für mindestens zwei oder mindestens drei oder mindestens vier Benutzer jeweils die Schritte zumindest teilweise gleichzeitig ausgeführt.

Für die Installation der Maschine können mehrere Installationselemente vorgesehen sein. Diesen Installationselementen kann jeweils ein Identifikator zugeordnet sein, durch welchen die Installationselemente eindeutig identifiziert werden können. Der Identifikator kann entsprechend eine Information sein, welche bspw. digital verarbeitet werden kann. Das jeweilige Installationselement kann den Identifikator dadurch aufweisen, dass ein physisches Identifikationsmittel am Installationselement vorgesehen und/oder angebracht ist. Die Installationselemente können bspw. Kabel oder Bauteile sein, welche ein funktionaler Teil der Maschine sind. Der Identifikator umfasst vorteilhafterweise eine eindeutige und insbesondere eineindeutige Kennung. Damit ist es möglich, das Installationselement anhand des Identifikators eindeutig im Zusammenhang mit der Maschine und/oder auch weiteren Maschinen und/oder der Installation der Maschine zu identifizieren. Dem Identifikator können eine oder mehrere Informationen über das Installationselement zugewiesen werden. Die wenigstens eine Information kann wenigstens eine der nachfolgenden Informationen umfassen: wenigstens eine Zustandsinformation, die ausgegebene Installationsinformation, eine Kennung der identifizierten Komponente, wenigstens eine der nachfolgend noch näher beschriebenen Dokumentationsspezifikationen. Eine digitale Hinterlegung der wenigstens einen Information zugeordnet zu dem Identifikator ermöglicht es somit, einen digitalen Zwilling des Installationselements zu schaffen. Auf diese Weise kann eine passive Smartifizierung des Installationselements ermöglicht werden. Insbesondere werden über die Installationselemente Geräte der Maschine wie Aktoren und/oder Sensoren betrieben, also vorzugsweise angesteuert und/oder ausgelesen. Für den Betrieb der Geräte kann eine Steuerungsvorrichtung wie eine SPS (Speicherprogrammierbare Steuerung) vorgesehen sein, welche über die Installationselemente und Komponenten den elektrischen Betrieb der Geräte durchführen kann. Hierzu kann die Steuerungsvorrichtung mit den Komponenten in elektrischer Verbindung stehen.

Vorzugsweise kann das Installationselement ein Kabel und/oder ein Bauteil umfassen, wobei das Kabel mindestens oder genau einen Steckverbinder aufweisen kann, und bevorzugt einseitig konfektioniert sein kann, d.h. einseitig einen weiblichen oder männlichen Stecker und an der anderen Seite ein offenes Ende aufweist. Alternativ, kann das Kabel auch zweiseitig konfektioniert sein, d.h. an jeder Seite weist das Kabel einen weiblichen oder männlichen Stecker auf.

Ferner kann es im Rahmen der Erfindung vorgesehen sein, dass die bereitgestellte Installationsvorgabe eine Installationsreferenz, insbesondere eine historische Installation, bereitstellt, wobei das Simulieren der identifizierten Installationsvariante die nachfolgenden Schritte umfasst:
- Analysieren von mehreren Referenzsegmenten, insbesondere Referenzkomponenten, der bereitgestellten Installationsreferenz hinsichtlich einer Eignung für die identifizierte Installationsvariante,
- Auswählen eines für die identifizierte Installationsvariante geeigneten Referenzsegments aus den analysierten Referenzsegmenten basierend auf dem Analysieren,
- Vergleichen der identifizierten Installationsvariante mit dem ausgewählten Referenzsegment hinsichtlich eines Einflusses auf die spezifizierte Funktionalität,
- Bereitstellen des Ergebnisses der Simulation basierend auf dem Vergleichen.

Dies hat den Vorteil, dass eine schnellere Bereitstellung eines Ergebnisses gewährleistet wird. Die Installationsvorgabe kann z. B. in einer ersten Speichereinheit hinterlegt sein, um auf diese Weise die individuelle Maschine elektronisch zu hinterlegen.

In einer weiteren Möglichkeit kann vorgesehen sein, dass das Ergebnis der Simulation wenigstens eines der folgenden Ergebnisse umfasst:
- einen Einfluss der identifizierten Installationsvariante auf eine Funktionsweise der Maschine,
- einen Einfluss der identifizierten Installationsvariante auf zukünftige Ausbaustufen der Maschine,
- eine Verursachung von wenigstens einer Fehlfunktion der identifizierten Installationsvariante,
- eine Topologieveränderung der Maschine, welche aus der identifizierten Installationsvariante resultiert,
- eine Hinzufügung wenigstens einer zusätzlichen Komponente, welche abweichend von der Installationsvorgabe aus der identifizierten Installationsvariante resultiert.

Dies ermöglicht eine schnellere und effektive Ergebnisbereitstellung der durchgeführten Simulation.

Vorzugsweise kann vorgesehen sein, dass das Verfahren ferner die nachfolgenden Schritte umfasst:
- Identifizieren wenigstens einer Installationsanweisung basierend auf dem Ergebnis der Simulation,
- Ausgeben der identifizierten Installationsanweisung für einen Benutzer, insbesondere einen Planer oder Werker.

Die Simulation kann bspw. durch eine Simulationseinheit erfolgen, welche die Installationsvariante auf die Funktionsfähigkeit hin simuliert. Ferner kann das Simulationsergebnis zu wenigstens einem der folgenden Ergebnisse führen:
a.) Installationsvariante hat keinen Einfluss auf die Funktionsweise der Anlage,
b.) Installationsvariante hat einen Einfluss auf die Funktionsweise der Anlage,
c.) Installationsvariante hat einen Einfluss auf die Funktionsweise zukünftige Ausbaustufen,
d.) Installationsvariante führt zu Fehlfunktionen,
e.) Installationsvariante führt nicht zu Fehlfunktionen,
f.) Änderung der Topologie ist nicht notwendig,
g.) Änderung der Topologie ist notwendig,
h.) weitere Installation ist mit den verfügbaren Komponenten möglich,
i.) weitere Installation ist mit den verfügbaren Komponenten nicht möglich.

Anschließend kann eine Dokumentationseinheit genutzt werden, um die ausgeführte Tätigkeit und/oder die Veränderung einer Anweisung unter Angabe des Grundes erfasst und in die Dokumentationseinheit hinterlegt werden.

Ferner kann im Rahmen der Erfindung vorgesehen sein, dass das Verfahren ferner wenigstens einen der folgenden Schritte umfasst:
- Initiieren einer Ausgabe des Ergebnisses der Simulation für einen Benutzer;
- Dokumentieren des Ergebnisses der Simulation und eines ergebnisbezogenen Simulationsparameters, insbesondere eines Parameters, welcher einen Anlass oder einen Grund für das Ergebnis der Simulation umfasst, wobei die Dokumentation in einem Datenspeicher hinterlegt wird.

Dies ermöglicht es dem Benutzer, mit deutlich weniger manuellem Aufwand das Ergebnis zu dokumentieren. Ferner kann das Dokumentieren wirksamer und mit mehr Hintergrundinformation erfolgen, da vorteilhafterweise Anmerkungen zur Installation, wie z. B. dem Grund oder dem Anlass hinterlegt werden können. Es ist möglich, dass das Dokumentieren automatisiert erfolgt. Dabei kann durch die Automatisierung der Dokumentation gewährleistet sein, dass die Hinterlegung an der richtigen Stelle erfolgt. Eine den jeweiligen Schritt ausführende Person kann diese Hinterlegungen dann ggf. nur noch quittieren. Es kann ferner bei der Dokumentation auch wenigstens eine Installationsdokumentation dokumentiert werden, welche wenigstens eine der nachfolgenden Informationen umfassen: Welches Bauteil wurde verwendet, an welcher Maschine und an welcher Stelle der Maschine wurde das konkrete Bauteil angebracht, von wem wurde es wann angeschlossen, an welchem Port wurde das Kabel angeschlossen, wie wurde es angeschlossen, wurde das Bauteil ordnungsgemäß angeschlossen, gab es Abweichungen zum Plan. Dabei kann die Dokumentation auch mit Verbindungsmodulen funktionieren, die nicht vorkonfiguriert oder an einer SPS angeschlossen sind. Dadurch werden Fehler vermieden, die durch die Verwendung äußerlich baugleicher, aber unterschiedlich konfigurierter Verbindungsmodule entstehen können. Durch die Kommunikationsfähigkeit dieser Verbindungsmodule und durch die Integration sämtlicher Informationen kann das Verfahren vorteilhafterweise auch dazu verwendet werden, den Benutzer bei der Installation der Automatisierungstechnik anzuleiten.

Das systematische Sammeln und Dokumentieren aller relevanten Informationen zur Installation, vorzugsweise zu einer Anlagen-Automatisierungstechnik, beispielsweise die verwendeten Komponenten, die Ausführung von Installations- und Wartungsaufgaben oder eingetretene Problemfälle, kann zu gesichertem Wissen über den gegenwärtigen Systemzustand führen. Die Benutzer können ferner von ihrer Dokumentationsaufgabe entlastet werden. Auch können fehleranfällige Dokumentationsaktivitäten der beteiligten Personen auf ein Minimum begrenzt werden, insbesondere, indem die zu dokumentierenden Informationen automatisiert erhoben und gespeichert werden. Damit wird das Risiko fehlender und / oder falscher Dokumentationen deutlich reduziert.

Zudem ist im Rahmen der Erfindung denkbar, dass das Initiieren der Ausgabe des Ergebnisses der Simulation zumindest einen der nachfolgenden Schritte umfasst:
- Initiieren einer Anzeige der identifizierten Installationsvariante auf einer Benutzeroberfläche eines Computers, vorzugsweise eines tragbaren Computers, wobei bevorzugt die Benutzeroberfläche einen digitalen Zwilling zumindest eines Teils der Maschine visualisiert, und besonders bevorzugt einen mechanischen und/oder elektrischen Aufbau und/oder elektrischen Anschlussplan des Teils der Maschine visualisiert,
- Initiieren einer Anzeige der identifizierten Installationsvariante an einer Anschlussstelle, insbesondere eines Steckplatzes, der elektrischen Komponente,
- Initiieren einer Ausgabe der Installationsanweisung für die identifizierte Installationsvariante als eine Anweisung für den Benutzer, das Installationselement an eine bestimmte Anschlussstelle der elektrischen Komponente anzuschließen, wobei vorzugsweise die Anschlussstelle anhand der Installationsvorgabe ermittelt wird,
- Initiieren einer Anzeige einer Anschlussstelle, insbesondere eines Steckplatzes, der elektrischen Komponente für das Installationselement mittels Erweiterter Realität,
- Initiieren einer akustischen Ausgabe, insbesondere einer Sprachausgabe, der Installationsanweisung.

Dies ermöglicht eine unmittelbare Information des Benutzers durch die Installationsanweisung, in welcher Weise das Installationselement installiert werden soll. Ferner kann es ein Aufleuchten oder Anzeigen des Anzeigeelements ermöglichen, eine richtig oder falsch zugeordnete Anschlussstelle entsprechend anzuzeigen. Hierzu kann die Komponente mehrere der Anzeigeelemente aufweisen, welche entsprechenden Anschlussstellen der Komponente zugeordnet sind, z. B. durch eine benachbarte Anordnung an einem Anschlusselement.

Es ist ferner möglich, dass ein, insbesondere digitaler, Identifikator eines Installationselements empfangen wird, vorzugsweise von einer Detektionsvorrichtung, welche hierzu zuvor ein physisch vorliegendes Identifikationsmittel wie einen maschinenlesbaren Code eingelesen hat und den Identifikator auf Basis des eingelesenen Identifikationsmittels generiert hat. Ferner kann die Installationsvorgabe eine Zuordnung des Installationselements zur Verbindung mit einer elektrischen Komponente wie einem Verbindungsmodul zur Verbindung mit dem Installationselement und weiteren Installationselementen spezifizieren. Sodann kann die die elektrische Komponente anhand der Installationsvorgabe, vorzugsweise durch ein Abfragen der elektrischen Komponente aus der Installationsvorgabe anhand des Identifikators, bevorzugt aus einer Liste und/oder Datenbank der Installationsvorgabe, identifiziert werden. Ferner kann eine Ausgabe wenigstens einer Installationsinformation basierend auf dem empfangenen Identifikator und der identifizierten Komponente initiiert werden, wobei vorzugsweise die Ausgabe eine visuelle und/oder akustische Ausgabe an einen Benutzer umfasst.

Die Anschlussstelle, welche gemäß der Installationsvorgabe für den Anschluss des Installationselements mit dem empfangenen Identifikator vorgesehen ist, kann bspw. über den empfangenen Identifikator aus der Installationsvorgabe abgefragt werden. Hierzu kann die Installationsvorgabe eine elektronische Abfrage ermöglichen, z. B. mittels einer Datenbank und/oder eine Liste und/oder dergleichen.

Die Anzeige der Anschlussstelle auf der Benutzeroberfläche kann bspw. eine grafische Darstellung der Anschlussstellen der Komponente umfassen, wobei die Anschlussstelle, welche für den Anschluss des Installationselements mit dem empfangenen Identifikator vorgesehen ist, grafisch hervorgehoben wird.

Die Benutzeroberfläche kann eine grafische Benutzeroberfläche sein, welche auf einem Bildschirm vorzugsweise eines Computers dargestellt wird. Der Computer kann bspw. ein tragbarer Computer wie ein Laptop oder Tablet sein.

Die Anzeige mittels Erweiterter Realität (engl. Augmented Reality) kann bspw. dadurch erfolgen, dass eine VR (Virtual Reality) Brille durch einen Benutzer verwendet wird, um zusätzliche Informationen anzuzeigen, und/oder dass die Umgebung des Benutzers durch eine Kamera aufzeichnet und das Kamerabild verarbeitet wird, um zusätzliche Informationen in das Kamerabild einzubringen. Die zusätzlichen Informationen umfassen z. B. die Hervorhebung der Anschlussstelle, wenn in dem Kamerabild die physische Anschlussstelle der Komponente zu sehen ist.

Ferner kann auch eine akustische Ausgabe vorgesehen sein, welche z. B. eine Ansteuerung eines Lautsprechers umfasst. Die akustische Ausgabe kann bspw. eine Sprachausgabe sein, durch welche die Anschlussbezeichnung der Anschlussstelle gesprochen wird.

Ein weiterer Vorteil kann im Rahmen der Erfindung erzielt werden, wenn die identifizierte Installationsvariante für wenigstens eine der folgenden Abweichungen von der bereitgestellten Installationsvorgabe spezifisch ist:
- eine Verwendung eines alternativen Installationselements,
- eine Verwendung einer alternativen Anschlussstelle der elektrischen Komponente, insbesondere eines alternativen Steckplatzes, vorzugsweise zur Verbindung mit dem Installationselement,
- eine Verwendung einer alternativen Verbindung zwischen einer elektrischen Komponente und einem Installationselement, insbesondere einem Bauteil.

Dies ermöglicht eine schnellere Anwendung der identifizierten Installationsvariante für den Benutzer. Vorteilhafterweise kann bei der Erfindung vorgesehen sein, dass das Verfahren zumindest einen der folgenden weiteren Schritte umfasst:
- Initiieren einer Speicherung der identifizierten Installationsvariante als ausgeführte Installation,
- Initiieren einer Speicherung der identifizierten Installationsvariante als geänderte Installationsanweisung und/oder weiteren Teil der bereitgestellten Installationsvorgabe.

Dies hat den Vorteil, dass die Qualität der Dokumentation von durchgeführten Installationen gewährleistet bleibt. Ferner, ermöglicht dies eine umfassendere Bewertung von Installationsvarianten.

Ein weiterer Vorteil im Rahmen der Erfindung ist erzielbar, wenn die Anlagenspezifikation eine topologische Anordnung der elektrischen Komponenten umfasst, in welcher die elektrischen Komponenten miteinander verschaltet sind.

Dies ermöglicht es dem Benutzer schneller und einfacher notwendige Installationsinformationen zuzuordnen oder zu finden.

Vorteilhaft ist es zudem, wenn die bereitgestellte Installationsvorgabe eine Installationskonfiguration und/oder eine Installationsdokumentation umfasst, welche in einem Datenspeicher hinterlegt und/oder an die elektrische Komponente übertragen wird.

Dies ermöglicht eine bessere und umfassendere fehlerfreie Informationsbereitstellung einer Installationsvorgabe. Des Weiteren ist es im Rahmen der Erfindung optional möglich, dass die bereitgestellte Installationsvorgabe eine vordefinierte Spezifikation über einen modularen Aufbau der Maschine umfasst, insbesondere über eine Verschaltung der Installationselemente in der Form von Kabeln und/oder Bauteilen mittels der elektrischen Komponente in der Form von Verbindungsmodulen, vorzugsweise umfassend einen Anschlussplan.

Dies hat den Vorteil, dass effektiver erforderliche Informationen der Installationsvorgabe bereitgestellt werden können. Es kann im Rahmen der Erfindung vorgesehen sein, dass ein digitaler Zwilling der Maschine anhand der Installationsvorgabe, insbesondere der Anlagenspezifikation, generiert und angezeigt wird, wobei die identifizierte Installationsvariante in dem angezeigten digitalen Zwilling dargestellt wird.

Dies hat den Vorteil, dass der Benutzer die Information durch die Anzeige in digitaler Form einfacher und schneller verwenden kann, um die Installationsvariante umzusetzen. Ebenfalls Gegenstand der Erfindung ist ein System für eine computer-gestützte Installation von räumlich dezentral angeordneten, elektrischen Komponenten einer Maschine, umfassend
- Eine Vorrichtung zur Datenverarbeitung, umfassend Mittel zur Ausführung der Schritte des erfindungsgemäßen Verfahrens,
- einen Datenspeicher für die Bereitstellung der Installationsvorgabe, wenigstens einer identifizierten Installationsvariante und der Anlagenspezifikation.

Damit bringt das erfindungsgemäße System die gleichen Vorteile mit sich, wie sie ausführlich mit Bezug auf ein erfindungsgemäßes Verfahren beschrieben worden sind.

Ebenfalls Gegenstand der Erfindung ist ein Computerprogramm, umfassend Befehle, die bei der Ausführung des Programms durch einen Computer, wie die erfindungsgemäße Vorrichtung zur Datenverarbeitung, diesen veranlassen, die Schritte eines erfindungsgemäßen Verfahrens auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Zudem kann eine Vorrichtung zur Datenverarbeitung, umfassend Mittel zur Ausführung der Schritte eines erfindungsgemäßen Verfahrens, ebenfalls Gegenstand der Erfindung sein. Die Vorrichtung kann dazu fähig sein, mit den Komponenten, insbesondere Modulen der Maschine, insbesondere Anlage, zu kommunizieren.

### Kurzbeschreibung der Zeichnungen

Zum besseren Verständnis der Offenbarung wird auf die folgenden Zeichnungen verwiesen:
- Fig. 1:: Eine zentrale Verschaltung bei einer Maschine mittels eines Schaltschranks.
- Fig. 2:: Eine dezentrale Verschaltung gemäß Ausführungsbeispielen der Erfindung.
- Fig. 3: Eine schematische Darstellung von Teilen eines Systems gemäß Ausführungsbeispielen der Erfindung.
- Fig. 4: Eine schematische Darstellung von Einzelheiten eines Verfahrens gemäß Ausführungsbeispielen der Erfindung.
- Fig. 5: Eine schematische Darstellung von Schritten eines Verfahrens gemäß Ausführungsbeispielen der Erfindung.

### Beschreibung der Ausführungsbeispiele

Das Planen, Installieren und Einrichten von Maschinen sowie elektronischer Automatisierungstechnik ist eine komplexe Aufgabe. Dies gilt für zentralisierte Schaltschrank-Systeme ebenso, wie für dezentralisierte Systeme, in denen Steuerungsmodule direkt an den Anlagen angebracht werden. Die entsprechenden Prozesse werden von unterschiedlichen Personen, wie Anlagen-Planer, Elektro-Planer, Installateur, Anlagenprogrammierer etc. durchgeführt. Eine Besonderheit bei dezentralen Systemen ist die Verteilung der Module an verschiedenen Stellen einer Maschine im Vergleich zu den zentralisierten Schaltschrank-Systemen. Gerade bei größeren Maschinen kann eine simultane, das heißt zeitgleich parallel durch mehrere Benutzer ausgeführte Installation aus zeitlichen und logistischen Gründen vorteilhaft sein. Um einen reibungslosen Installationsprozess zu ermöglichen, soll der Arbeitsstand automatisch, benutzerindividuell und in Echtzeit digital dokumentiert werden. Über den ganzen Anlagen-Lebenszyklus ist es aus unterschiedlichen Gründen (wie z.B. Wartungsplanung, Systemdiagnosen) wichtig, über eine vollständige Dokumentation aller relevanten Informationen zu verfügen.

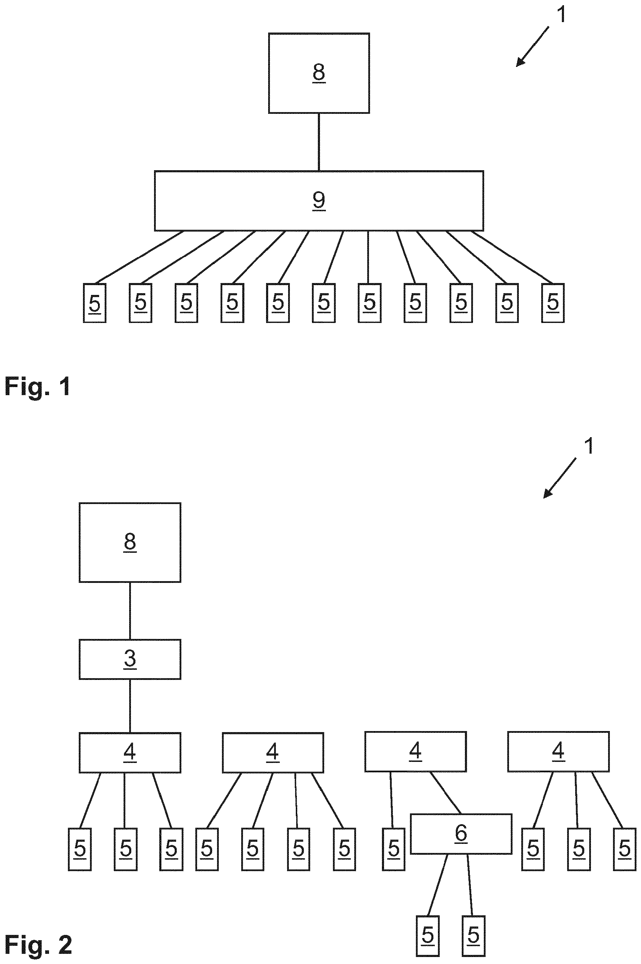

In Fig. 1 ist schematisch eine zentrale Verschaltung mittels eines Schaltschranks 9 dargestellt, um diese einer dezentralen Verschaltung mittels räumlich dezentral angeordneten, elektrischen Komponenten 4 einer Maschine 1 in Fig. 2 gegenüberzustellen. Anstelle einer Verbindung sämtlicher Geräte 5 wie Sensoren und Aktoren unmittelbar mit dem Schaltschrank 9 wie in Fig. 1 dargestellt, können bei der dezentralen Verschaltung in Fig. 2 mehrere Komponenten 4, also insbesondere Verbindungsmodule, eingesetzt werden. Diese ermöglichen, wie der Schaltschrank 9, eine Kopplung der Geräte 5 mit einer Steuerungsvorrichtung 8 wie einer SPS. Allerdings können die Verbindungsmodule 4 dezentral und verteilt in der Nähe zu den Geräte 5 vorgesehen sein. Die Verbindungsmodule 4 verschalten somit jeweils die Geräte 5 nur teilweise, wobei die Verbindungsmodule 4 zusammen oder beispielsweise ein und/oder mehrere Verbindungsmodule 4 über jeweils einen und/oder mehrere Hubs 6 die gesamte Verschaltung vornehmen. Um die Konfiguration und/oder Ansteuerung der Verbindungsmodule 4 zentral zu ermöglichen, kann ein Mastermodul 3 mehreren der einzelnen Verbindungsmodulen 4 vorgeschaltet sein. Ebenfalls ist es möglich, dass eine weitere Untergliederung der Verschaltung mittels wenigstens eines Hubs 6 erfolgt.

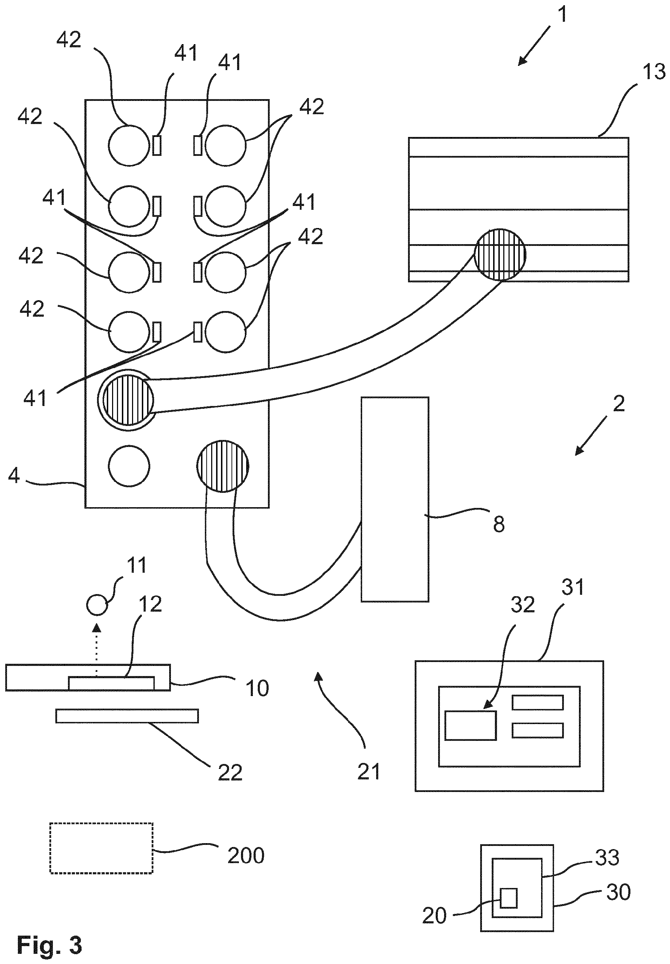

In Fig. 3 sind Teile eines Systems 2 gemäß Ausführungsbeispielen der Erfindung dargestellt, welches für eine computer-gestützte Installation von räumlich dezentral angeordneten elektrischen Komponenten 4 einer Maschine 1 vorgesehen sein kann. Das System 2 kann eine Detektionsvorrichtung 22, insbesondere einen Scanner 22 oder eine Kamera 22, für eine Bereitstellung eines Identifikators 11 eines Installationselements 10, vorzugsweise eines Kabels 11 oder eines Bauteils 11, umfassen. Ferner kann das System 2 wenigstens eine elektrische Komponente 4, vorzugsweise in der Form eines Verbindungsmoduls 4 zur Verbindung mit dem Installationselement 10 und weiteren Installationselementen 10, aufweisen. Ebenfalls kann eine Vorrichtung 30 zur Datenverarbeitung Teil des Systems 2 sein, wobei diese Datenverarbeitungsvorrichtung 30 Mittel zur Ausführung der Schritte eines Verfahren 100 gemäß Ausführungsbeispielen der Erfindung umfassen kann.

Der Identifikator 11 kann in einem dem Installationselement 10 zugeordneten, insbesondere an diesem angeordneten, maschinenlesbaren Code 12 kodiert sein, wobei der maschinenlesbare Code 12 mittels der Detektionsvorrichtung 22 maschinenlesbar ausgeführt ist. Damit ist es für einen Benutzer möglich, mittels der Detektionsvorrichtung 22 den Code 12 einzuscannen und somit den Identifikator 11 an die Datenverarbeitungsvorrichtung 30 zu übertragen.

Ferner können die Komponenten 4 und wenigstens ein Computer 30, 31 und/oder eine Steuerungsvorrichtung 8 über ein Bussystem 21 jeweils zur bidirektionalen Kommunikation miteinander verbunden sein, wobei die bidirektionale Kommunikation auf Basis eines Kommunikationsprotokolls für ein Feldbussystem vorgesehen sein kann, insbesondere auf Basis eines ProfiNet-, Ethernet/IP- oder 802.3-Standards, und/oder die bidirektionale Kommunikation kabelgebunden über ein Bussystem 21 oder kabellos mittels Bluetooth oder WLAN, auf Basis eines Standards gemäß IEEE 802.11 oder auf Basis eines Mobilfunk-Telekommunikationsstandards vorgesehen sein kann. Um einen Betrieb der Komponente 4 zu ermöglichen, kann die Komponente 4 ferner mit einer Energieversorgung 13 verbunden sein.

Ferner ist ein Computerprogramm 20 dargestellt, welches Befehle umfasst, die bei der Ausführung des Programms durch einen Computer 30 diesen veranlassen, die Schritte des Verfahrens 100 gemäß Ausführungsbeispielen der Erfindung auszuführen.

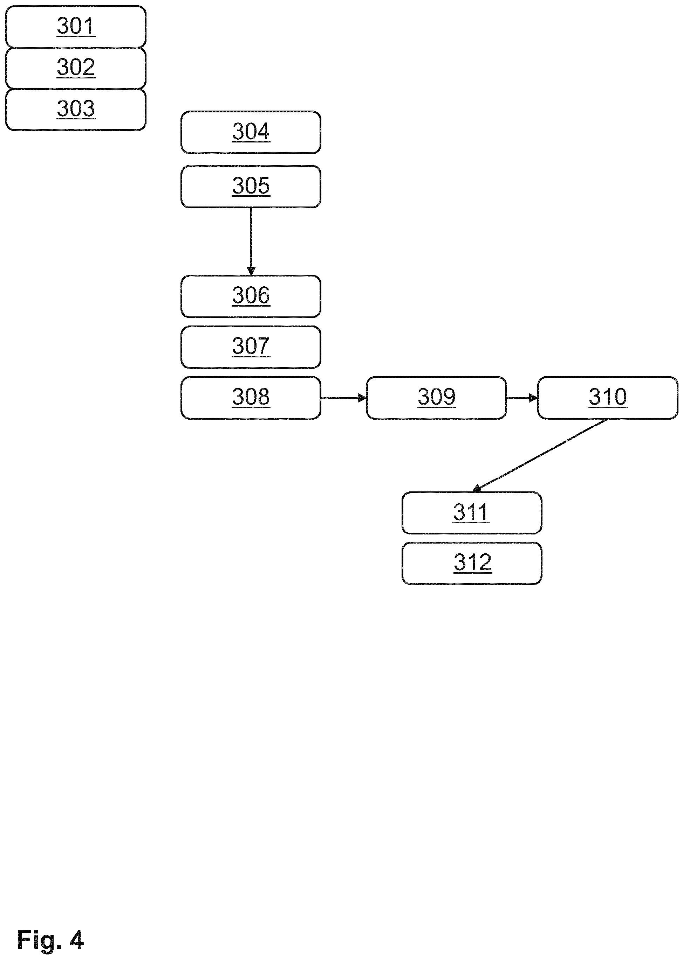

In Fig. 4 ist ein Verfahren 100 gemäß Ausführungsbeispielen der Erfindung mit weiteren Einzelheiten visualisiert. Über einen in Fig. 3 dargestellten Computer 31, wie ein Tablet oder Laptop, kann ein Benutzer zunächst eine Nutzeranmeldung 301 durchführen. Hierzu kann der Nutzer eine grafische Benutzeroberfläche 32 nutzen, welche durch den Computer 31 bereitgestellt wird. Ebenfalls über die Benutzeroberfläche 32 kann eine Projektauswahl 302 erfolgen, durch welche bspw. eine Installationsvorgabe 200 für ein gewünschtes Projekt geladen wird. Damit ist es möglich, einen Beginn 303 für eine Anleitung des Benutzers zur Installation der Maschine 1 mittels wenigstens einer Installationsanweisung einzuleiten.

Optional kann nach dem Beginn 303 zunächst eine Darstellung 304 des letzten ausgeführten Schrittes erfolgen, bspw. der letzten Installationsanweisung und/oder einer anderen Anweisung für die Installation. Zunächst kann eine Identifikation 305 eines Installationselements 10 durch den Benutzer erfolgen, wobei der Benutzer hierzu bspw. eine Detektionsvorrichtung 22 wie einen Handscanner zum Scannen eines Identifikationsmittels 12 am Installationselement 10 nutzt. Anhand des gescannten Identifikationsmittels 12 kann dann der Identifikator 11 ermittelt werden und an den Computer 31 und/oder eine Vorrichtung 30 zur Datenverarbeitung übertragen werden. Anhand des empfangenen Identifikators 11 und der Installationsvorgabe 200 kann dann die elektrische Komponente 4 und ihre Anschlussstelle 42 identifiziert werden, an welcher das Installationselement 10 angeschlossen werden soll. Hierzu umfasst die Installationsvorgabe 200 bspw. eine Matrix, in welcher verschiedene Installationselemente 10 den Komponenten 4 zugeordnet werden. Sodann kann dem Benutzer durch die Installationsanweisung mitgeteilt werden, welche der Komponenten 4 hierbei identifiziert wurde. Hierzu leuchtet bspw. ein Anzeigeelemente 41 an der Komponente 4 auf. Dies kann durch eine Signalübertragung 306 von der Datenverarbeitungsvorrichtung 30 an Komponente 4 ermöglicht werden. Anschließend kann durch den Benutzer eine Verbindung 307 zwischen dem Installationselement 10 und der Komponente hergestellt werden. Anhand der Installationsvorgabe 200 kann eine Bestätigung 308 der korrekten Montage erfolgen. Anschließend ist ggf. eine zumindest teilweise automatisierte Dokumentation 309 der korrekten Montage und Dokumentation 310 der Erledigung des Arbeitsschritts in der Installationsvorgabe 200 möglich. Dies kann z. B. durch eine Darstellung 311 in einer Maschinenübersicht mit einem grünen Haken oder z.B. durch ein Einblenden der betroffenen Verbindung in einem Schaltplan erfolgen und dem Benutzer über die Benutzeroberfläche 32 dargestellt werden. Anschließend kann erneut eine Identifikation eines Installationselements 312 durchgeführt werden. Durch die Anleitung des Benutzers, insbesondere Planers oder Werkers bei der Installation der elektrischen Automatisierungstechnik und durch die automatisierte Prüfung, ob ein geeignetes Bauteil ordnungsgemäß angeschlossen wurde, kann eine fehlerfreie Herstellung des Systems sichergestellt werden.

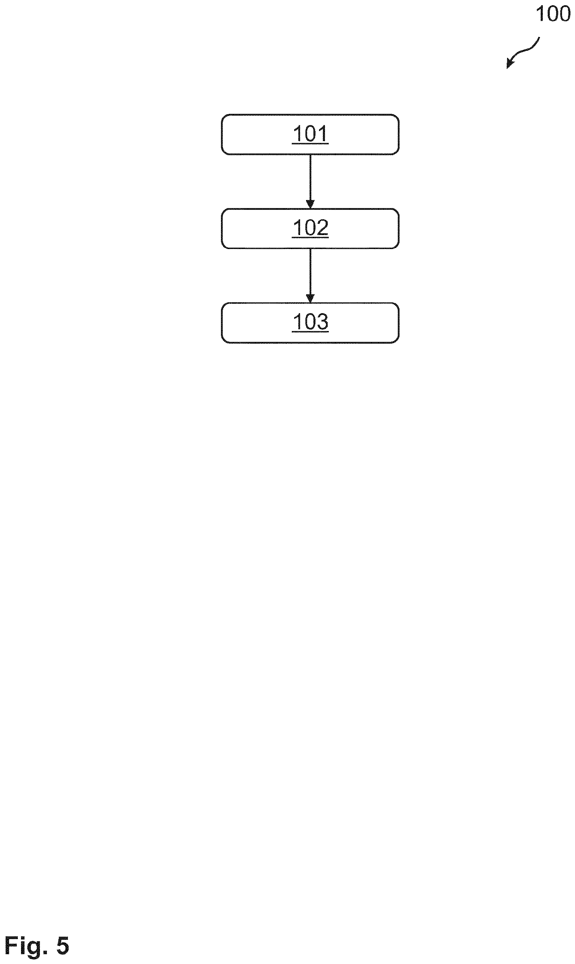

In Fig. 5 ist ein Ausführungsbeispiel eines erfindungsgemäßen Verfahrens 100 für eine computer-gestützte Installation von räumlich dezentral angeordneten, elektrischen Komponenten 4 einer Maschine 1, insbesondere einer Anlage 1, visualisiert. Gemäß einem ersten Verfahrensschritt 101 erfolgt hierbei ein Bereitstellen 101 einer Installationsvorgabe 200, insbesondere einer Anlagenspezifikation der Maschine 1, welche eine Zuordnung eines Installationselements 10, vorzugsweise eines Kabels und/oder eines Bauteils, sowie einer elektrischen Komponente 4, vorzugsweise in der Form eines Verbindungsmoduls 4 zur Verbindung mit dem Installationselement 10 und weiteren Installationselementen 10, für die Installation und deren Funktionalität spezifiziert. Anschließend erfolgt gemäß einem zweiten Verfahrensschritt 102 ein Identifizieren einer Installationsvariante der Installation basierend auf der bereitgestellten Installationsvorgabe 200. Gemäß einem dritten Verfahrensschritt 103 erfolgt ein Simulieren der identifizierten Installationsvariante hinsichtlich eines Einflusses auf die spezifizierte Funktionalität, wodurch ein Ergebnis der Simulation hinsichtlich einer Funktionsfähigkeit der identifizierten Installationsvariante bereitgestellt wird.

Darüber hinaus ist es möglich, dass die bereitgestellte Installationsvorgabe 200 eine Installationsreferenz, insbesondere eine historische Installation, bereitstellt, wobei das Simulieren der identifizierten Installationsvariante die nachfolgenden Schritte umfassen kann:
- Analysieren von mehreren Referenzsegmenten, insbesondere Referenzkomponenten, der bereitgestellten Installationsreferenz hinsichtlich einer Eignung für die identifizierte Installationsvariante,
- Auswählen eines für die identifizierte Installationsvariante geeigneten Referenzsegments aus den analysierten Referenzsegmenten basierend auf dem Analysieren,
- Vergleichen der identifizierten Installationsvariante mit dem ausgewählten Referenzsegment hinsichtlich eines Einflusses auf die spezifizierte Funktionalität,
- Bereitstellen des Ergebnisses der Simulation basierend auf dem Vergleichen.

Das Ergebnis der Simulation kann dabei wenigstens eines der folgenden Ergebnisse umfasst: einen Einfluss der identifizierten Installationsvariante auf eine Funktionsweise der Maschine 1, einen Einfluss der identifizierten Installationsvariante auf zukünftige Ausbaustufen der Maschine 1, eine Verursachung von wenigstens einer Fehlfunktion der identifizierten Installationsvariante, eine Topologieveränderung der Maschine 1, welche aus der identifizierten Installationsvariante resultiert und/oder eine Hinzufügung wenigstens einer zusätzlichen Komponente 4, welche abweichend von der Installationsvorgabe 200 aus der identifizierten Installationsvariante resultiert.

Ferner kann bei dem Verfahren 100 wenigstens eine Installationsanweisung basierend auf dem Ergebnis der Simulation identifiziert werden. Anschließend kann die identifizierte Installationsanweisung für einen Benutzer, insbesondere einen Planer oder Werker, ausgegeben werden. Auch ist es möglich, dass eine Ausgabe des Ergebnisses der Simulation für einen Benutzer initiiert wird. Ferner kann das Ergebnisses der Simulation und eines ergebnisbezogenen Simulationsparameters, insbesondere eines Parameters, welcher einen Anlass oder einen Grund für das Ergebnis der Simulation umfasst, dokumentiert werden. Hierbei kann die Dokumentation in einem Datenspeicher 33 hinterlegt werden.

Das Initiieren der Ausgabe des Ergebnisses der Simulation kann ein Initiieren einer Anzeige der identifizierten Installationsvariante auf einer in Fig. 3 gezeigten Benutzeroberfläche 32 eines Computers 31, vorzugsweise eines tragbaren Computers 31, umfassen. Auch ist es möglich, dass eine Anzeige der identifizierten Installationsvariante an einer Anschlussstelle 42, insbesondere eines Steckplatzes 42, der elektrischen Komponente 4 erfolgt. Ferner kann ein Initiieren einer Ausgabe der Installationsanweisung für die identifizierte Installationsvariante 200 als eine Anweisung für den Benutzer, das Installationselement 10 an eine bestimmte Anschlussstelle der elektrischen Komponente 4 anzuschließen, vorgesehen sein. Zudem ist ein Initiieren einer Anzeige einer Anschlussstelle 42 der elektrischen Komponente 4 für das Installationselement 10 mittels Erweiterter Realität möglich und/oder ein Initiieren einer akustischen Ausgabe, insbesondere einer Sprachausgabe, der Installationsanweisung.

Die identifizierte Installationsvariante kann für wenigstens eine der folgenden Abweichungen von der bereitgestellten Installationsvorgabe 200 spezifisch sein: eine Verwendung eines alternativen Installationselements, eine Verwendung einer alternativen Anschlussstelle der elektrischen Komponente, eine Verwendung einer alternativen Verbindung zwischen einer elektrischen Komponente 4 und einem Installationselement 10.

Das Verfahren 100 kann zumindest einen der folgenden weiteren Schritte umfassen: Initiieren einer Speicherung der identifizierten Installationsvariante 200 als ausgeführte Installation, und/oder Initiieren einer Speicherung der identifizierten Installationsvariante als geänderte Installationsanweisung und/oder weiteren Teil der bereitgestellten Installationsvorgabe 200.

Die Anlagenspezifikation kann eine topologische Anordnung der elektrischen Komponenten 4 umfassen, in welcher die elektrischen Komponenten 4 miteinander verschaltet sind. Auch ist es denkbar, dass die bereitgestellte Installationsvorgabe 200 eine Installationskonfiguration und/oder eine Installationsdokumentation umfasst, welche in einem Datenspeicher 33 hinterlegt und/oder an die elektrische Komponente 4 übertragen wird. Die bereitgestellte Installationsvorgabe 200 kann eine vordefinierte Spezifikation über einen modularen Aufbau der Maschine 1 umfassen, insbesondere über eine Verschaltung der Installationselemente 10 in der Form von Kabeln und/oder Bauteilen mittels der elektrischen Komponente 4 in der Form von Verbindungsmodulen 4, vorzugsweise umfassend einen Anschlussplan.

In Fig. 3 ist außerdem ein System 2 für eine computer-gestützte Installation von räumlich dezentral angeordneten, elektrischen Komponenten 4 einer Maschine 1 visualisiert, umfassend eine Vorrichtung 30 zur Datenverarbeitung, umfassend Mittel zur Ausführung der Schritte eines Verfahrens 100 gemäß Ausführungsbeispielen der Erfindung. Ebenfalls gezeigt ist ein Datenspeicher 33 für die Bereitstellung der Installationsvorgabe 200, wenigstens einer identifizierten Installationsvariante und der Anlagenspezifikation. Ein Computerprogramm 20 kann ferner vorgesehen sein, welches Befehle umfasst, die bei der Ausführung des Computerprogramms 20 durch einen Computer 30 diesen veranlassen, die Schritte des Verfahrens 100 auszuführen.

Obwohl einige Aspekte im Zusammenhang mit einer Vorrichtung beschrieben wurden, ist es klar, dass diese Aspekte auch eine Beschreibung des entsprechenden Verfahrens darstellen, wobei ein Element oder eine Vorrichtung einem Verfahrensschritt oder einem Merkmal eines Verfahrensschritts entspricht. Analog dazu stellen Aspekte, die im Zusammenhang mit einem Verfahrensschritt beschrieben werden, auch eine Beschreibung eines entsprechenden Blocks oder Elements oder Merkmals eines entsprechenden Geräts dar.

Ausführungsformen der Erfindung können auf einem Computersystem implementiert werden. Bei dem Computersystem kann es sich um ein lokales Computergerät (z. B. Personalcomputer, Laptop, Tablet-Computer oder Mobiltelefon) mit einem oder mehreren Prozessoren und einem oder mehreren Speichergeräten handeln oder um ein verteiltes Computersystem (z. B. ein Cloud-Computersystem mit einem oder mehreren Prozessoren und einem oder mehreren Speichergeräten, die an verschiedenen Orten verteilt sind, z. B. bei einem lokalen Client und/oder einer oder mehreren entfernten Serverfarmen und/oder Datenzentren). Das Computersystem kann jede beliebige Schaltung oder Kombination von Schaltungen umfassen. In einer Ausführungsform kann das Computersystem einen oder mehrere Prozessoren beliebiger Art umfassen. Der hier verwendete Begriff "Prozessor" kann jede Art von Rechenschaltung bezeichnen, z. B. einen Mikroprozessor, einen Mikrocontroller, einen CISC-Mikroprozessor (Complex Instruction Set Computing), einen RISC-Mikroprozessor (Reduced Instruction Set Computing), einen VLIW-Mikroprozessor (Very Long Instruction Word), einen Grafikprozessor, einen digitalen Signalprozessor (DSP), einen Mehrkernprozessor, ein FPGA (Field Programmable Gate Array) oder jede andere Art von Prozessor oder Verarbeitungsschaltung. Andere Arten von Schaltkreisen, die im Computersystem enthalten sein können, können ein kundenspezifischer Schaltkreis, ein anwendungsspezifischer integrierter Schaltkreis (ASIC) oder ähnliches sein, wie z. B. ein oder mehrere Schaltkreise (z. B. ein Kommunikationsschaltkreis) zur Verwendung in drahtlosen Geräten wie Mobiltelefonen, Tablet-Computern, Laptop-Computern, Zwei-Wege-Funkgeräten und ähnlichen elektronischen Systemen. Das Computersystem kann eine oder mehrere Speichervorrichtungen enthalten, die ein oder mehrere für die jeweilige Anwendung geeignete Speicherelemente umfassen können, wie z. B. einen Hauptspeicher in Form eines Direktzugriffsspeichers (RAM), eine oder mehrere Festplatten und/oder ein oder mehrere Laufwerke, die Wechseldatenträger wie Compact Disks (CD), Flash-Speicherkarten, digitale Videodisks (DVD) und dergleichen verarbeiten. Das Computersystem kann auch ein Anzeigegerät, einen oder mehrere Lautsprecher und eine Tastatur und/oder ein Steuergerät enthalten, das eine Maus, einen Trackball, einen Touchscreen, ein Spracherkennungsgerät oder ein anderes Gerät umfassen kann, das es einem Systembenutzer ermöglicht, Informationen in das Computersystem einzugeben und Informationen von ihm zu empfangen.

Einige oder alle Verfahrensschritte können von einem Hardware-Gerät (oder unter Verwendung eines solchen) ausgeführt werden, wie z. B. einem Prozessor, einem Mikroprozessor, einem programmierbaren Computer oder einer elektronischen Schaltung. In einigen Ausführungsformen können einige oder mehrere der wichtigsten Verfahrensschritte von einem solchen Gerät ausgeführt werden.

Abhängig von bestimmten Implementierungsanforderungen können Ausführungsformen der Erfindung in Hardware oder in Software implementiert werden. Die Implementierung kann unter Verwendung eines nicht-übertragbaren Speichermediums wie eines digitalen Speichermediums, beispielsweise einer Diskette, einer DVD, einer Blu-Ray, einer CD, eines ROM, eines PROM, eines EPROM, eines EEPROM oder eines FLASH-Speichers erfolgen, auf dem elektronisch lesbare Steuersignale gespeichert sind, die mit einem programmierbaren Computersystem zusammenwirken (oder zusammenwirken können), so dass das jeweilige Verfahren durchgeführt wird. Daher kann das digitale Speichermedium computerlesbar sein.

Einige Ausführungsformen der Erfindung umfassen einen Datenträger mit elektronisch lesbaren Steuersignalen, die in der Lage sind, mit einem programmierbaren Computersystem zusammenzuarbeiten, so dass eines der hier beschriebenen Verfahren durchgeführt wird.

Im Allgemeinen können Ausführungsformen der vorliegenden Erfindung als Computerprogrammprodukt mit einem Programmcode implementiert werden, wobei der Programmcode zur Durchführung eines der Verfahren dient, wenn das Computerprogrammprodukt auf einem Computer läuft. Der Programmcode kann zum Beispiel auf einem maschinenlesbaren Träger gespeichert sein.

Andere Ausführungsformen umfassen das Computerprogramm zur Durchführung eines der hier beschriebenen Verfahren, das auf einem maschinenlesbaren Träger gespeichert ist.

Mit anderen Worten, eine Ausführungsform der vorliegenden Erfindung ist daher ein Computerprogramm mit einem Programmcode zur Durchführung eines der hierin beschriebenen Verfahren, wenn das Computerprogramm auf einem Computer läuft.

Eine weitere Ausführungsform der vorliegenden Erfindung ist daher ein Speichermedium (oder ein Datenträger oder ein computerlesbares Medium), auf dem das Computerprogramm zur Durchführung eines der hierin beschriebenen Verfahren gespeichert ist, wenn es von einem Prozessor ausgeführt wird. Der Datenträger, das digitale Speichermedium oder das aufgezeichnete Medium sind typischerweise greifbar und/oder nicht-übertragbar. Eine weitere Ausführungsform der vorliegenden Erfindung ist ein Gerät, wie hierin beschrieben, mit einem Prozessor und dem Speichermedium.

Eine weitere Ausführungsform der Erfindung ist daher ein Datenstrom oder eine Folge von Signalen, die das Computerprogramm zur Durchführung eines der hierin beschriebenen Verfahren darstellen. Der Datenstrom bzw. die Signalfolge kann beispielsweise so ausgestaltet sein, dass er bzw. sie über eine Datenkommunikationsverbindung, z.B. über das Internet, übertragen werden kann.

Eine weitere Ausführungsform umfasst ein Verarbeitungsmittel, z. B. einen Computer oder ein programmierbares Logikgerät, das so konfiguriert oder angepasst ist, dass es eines der hierin beschriebenen Verfahren durchführen kann.

Eine weitere Ausführungsform umfasst einen Computer, auf dem das Computerprogramm zur Durchführung eines der hierin beschriebenen Verfahren installiert ist.

Eine weitere Ausführungsform der Erfindung umfasst eine Vorrichtung oder ein System, die bzw. das so konfiguriert ist, dass sie bzw. es ein Computerprogramm zur Durchführung eines der hierin beschriebenen Verfahren an einen Empfänger überträgt (z. B. auf elektronischem oder optischem Weg). Bei dem Empfänger kann es sich beispielsweise um einen Computer, ein mobiles Gerät, ein Speichergerät oder dergleichen handeln. Die Vorrichtung oder das System kann zum Beispiel einen Dateiserver zur Übertragung des Computerprogramms an den Empfänger umfassen.

In einigen Ausführungsformen kann eine programmierbare Logikvorrichtung (z. B. ein feldprogrammierbares Gate-Array) verwendet werden, um einige oder alle Funktionen der hier beschriebenen Verfahren auszuführen. In einigen Ausführungsformen kann ein feldprogrammierbares Gate-Array mit einem Mikroprozessor zusammenarbeiten, um eines der hier beschriebenen Verfahren durchzuführen. Im Allgemeinen werden die Verfahren vorzugsweise von einem beliebigen Hardware-Gerät durchgeführt.

### Liste der Bezugszeichen

- 1: Maschine, Anlage
- 2: System
- 3: Mastermodul
- 4: Modul, Komponente, Verbindungsmodul
- 5: Geräte, Sensor, Aktor
- 6: Hub
- 8: Steuerungsvorrichtung, SPS
- 9: Schaltschrank

- 10: Installationselement
- 11: Identifikator
- 12: Identifikationsmittel, maschinenlesbarer Code
- 13: Energieversorgung

- 20: Computerprogramm
- 21: Bussystem
- 22: Detektionsvorrichtung

- 30: Vorrichtung
- 31: Computer
- 32: Benutzeroberfläche
- 33: Datenspeicher

- 41: Anzeigeelement
- 42: Anschlussstelle, Steckplatz

- 100: Verfahren
- 101: erster Verfahrensschritt
- 102: zweiter Verfahrensschritt
- 103: dritter Verfahrensschritt

- 200: Installationsvorgabe

- 301: Nutzeranmeldung
- 302: Projektauswahl
- 303: Beginn Anleitung
- 304: Darstellung letzter ausgeführter Schritt
- 305: Identifikation eines Installationselements, insbesondere Kabels
- 306: Signal an Komponente zum Aufleuchten des Anzeigeelements
- 307: Verbindung zwischen Kabel und Modul hergestellt
- 308: Bestätigung korrekte Montage
- 309: Dokumentation korrekte Montage
- 310: Dokumentation Arbeitsschritt erledigt
- 311: Darstellung Maschinenübersicht
- 312: Identifikation eines Installationselements

## Patentansprüche

1. Ein Verfahren (100) für eine computer-gestützte Installation von räumlich dezentral angeordneten, elektrischen Komponenten (4) einer Maschine (1), insbesondere einer Anlage (1), umfassend:
Bereitstellen (101) einer Installationsvorgabe (200), insbesondere einer Anlagenspezifikation der Maschine (1), welche eine Zuordnung eines Installationselements (10), vorzugsweise eines Kabels und/oder eines Bauteils, sowie einer elektrischen Komponente (4), vorzugsweise in der Form eines Verbindungsmoduls (4) zur Verbindung mit dem Installationselement (10) und weiteren Installationselementen (10), für die Installation und deren Funktionalität spezifiziert;
Identifizieren (102) einer Installationsvariante der Installation basierend auf der bereitgestellten Installationsvorgabe (200); und
Simulieren (103) der identifizierten Installationsvariante hinsichtlich eines Einflusses auf die spezifizierte Funktionalität, wodurch ein Ergebnis der Simulation hinsichtlich einer Funktionsfähigkeit der identifizierten Installationsvariante bereitgestellt wird.

2. Das Verfahren (100) nach Anspruch 1, wobei die bereitgestellte Installationsvorgabe (200) eine Installationsreferenz, insbesondere eine historische Installation, bereitstellt, wobei das Simulieren der identifizierten Installationsvariante die nachfolgenden Schritte umfasst:
Analysieren von mehreren Referenzsegmenten, insbesondere Referenzkomponenten, der bereitgestellten Installationsreferenz hinsichtlich einer Eignung für die identifizierte Installationsvariante;
Auswählen eines für die identifizierte Installationsvariante geeigneten Referenzsegments aus den analysierten Referenzsegmenten basierend auf dem Analysieren;
Vergleichen der identifizierten Installationsvariante mit dem ausgewählten Referenzsegment hinsichtlich eines Einflusses auf die spezifizierte Funktionalität; und
Bereitstellen des Ergebnisses der Simulation basierend auf dem Vergleichen.

3. Das Verfahren (100) nach Anspruch 1 oder 2, wobei das Ergebnis der Simulation wenigstens eines der folgenden Ergebnisse umfasst:
einen Einfluss der identifizierten Installationsvariante auf eine Funktionsweise der Maschine (1);
einen Einfluss der identifizierten Installationsvariante auf zukünftige Ausbaustufen der Maschine (1);
eine Verursachung von wenigstens einer Fehlfunktion der identifizierten Installationsvariante;
eine Topologieveränderung der Maschine (1), welche aus der identifizierten Installationsvariante resultiert; und
eine Hinzufügung wenigstens einer zusätzlichen Komponente (4), welche abweichend von der Installationsvorgabe (200) aus der identifizierten Installationsvariante resultiert.

4. Das Verfahren (100) nach Anspruch 3, wobei das Verfahren (100) ferner die nachfolgenden Schritte umfasst:
Identifizieren wenigstens einer Installationsanweisung basierend auf dem Ergebnis der Simulation; und
Ausgeben der identifizierten Installationsanweisung für einen Benutzer, insbesondere einen Planer oder Werker.

5. Das Verfahren (100) nach einem der vorhergehenden Ansprüche, wobei das Verfahren (100) ferner wenigstens einen der folgenden Schritte umfasst:
Initiieren einer Ausgabe des Ergebnisses der Simulation für einen Benutzer;
Dokumentieren des Ergebnisses der Simulation und eines ergebnisbezogenen Simulationsparameters, insbesondere eines Parameters, welcher einen Anlass oder einen Grund für das Ergebnis der Simulation umfasst, wobei die Dokumentation in einem Datenspeicher (33) hinterlegt wird.

6. Das Verfahren (100) nach Anspruch 5, wobei das Initiieren der Ausgabe des Ergebnisses der Simulation zumindest einen der nachfolgenden Schritte umfasst:
Initiieren einer Anzeige der identifizierten Installationsvariante auf einer Benutzeroberfläche (32) eines Computers (31), vorzugsweise eines tragbaren Computers (31), wobei bevorzugt die Benutzeroberfläche (32) einen digitalen Zwilling zumindest eines Teils der Maschine (1) visualisiert, und besonders bevorzugt einen mechanischen und/oder elektrischen Aufbau und/oder elektrischen Anschlussplan des Teils der Maschine (1) visualisiert;
Initiieren einer Anzeige der identifizierten Installationsvariante an einer Anschlussstelle (42), insbesondere eines Steckplatzes (42), der elektrischen Komponente (4);
Initiieren einer Ausgabe der Installationsanweisung für die identifizierte Installationsvariante (200) als eine Anweisung für den Benutzer, das Installationselement (10) an eine bestimmte Anschlussstelle der elektrischen Komponente (4) anzuschließen, wobei vorzugsweise die Anschlussstelle (42) anhand der Installationsvorgabe (200) ermittelt wird;
Initiieren einer Anzeige einer Anschlussstelle (42), insbesondere eines Steckplatzes (42), der elektrischen Komponente (4) für das Installationselement (10) mittels Erweiterter Realität;
Initiieren einer akustischen Ausgabe, insbesondere einer Sprachausgabe, der Installationsanweisung.

7. Das Verfahren (100) nach einem der vorhergehenden Ansprüche, wobei die identifizierte Installationsvariante für wenigstens eine der folgenden Abweichungen von der bereitgestellten Installationsvorgabe (200) spezifisch ist:
eine Verwendung eines alternativen Installationselements;
eine Verwendung einer alternativen Anschlussstelle der elektrischen Komponente, insbesondere eines alternativen Steckplatzes, vorzugsweise zur Verbindung mit dem Installationselement;
eine Verwendung einer alternativen Verbindung zwischen einer elektrischen Komponente (4) und einem Installationselement (10), insbesondere einem Bauteil.

8. Das Verfahren (100) nach einem der vorhergehenden Ansprüche, wobei das Verfahren (100) zumindest einen der folgenden weiteren Schritte umfasst:
Initiieren einer Speicherung der identifizierten Installationsvariante (200) als ausgeführte Installation;
Initiieren einer Speicherung der identifizierten Installationsvariante als geänderte Installationsanweisung und/oder weiteren Teil der bereitgestellten Installationsvorgabe (200).

9. Das Verfahren (100) nach einem der vorhergehenden Ansprüche, wobei die Anlagenspezifikation eine topologische Anordnung der elektrischen Komponenten (4) umfasst, in welcher die elektrischen Komponenten (4) miteinander verschaltet sind.

10. Das Verfahren (100) nach einem der vorhergehenden Ansprüche, wobei die bereitgestellte Installationsvorgabe (200) eine Installationskonfiguration und/oder eine Installationsdokumentation umfasst, welche in einem Datenspeicher (33) hinterlegt und/oder an die elektrische Komponente (4) übertragen wird.

11. Das Verfahren (100) nach einem der vorhergehenden Ansprüche, wobei die bereitgestellte Installationsvorgabe (200) eine vordefinierte Spezifikation über einen modularen Aufbau der Maschine (1) umfasst, insbesondere über eine Verschaltung der Installationselemente (10) in der Form von Kabeln und/oder Bauteilen mittels der elektrischen Komponente (4) in der Form von Verbindungsmodulen (4), vorzugsweise umfassend einen Anschlussplan.

12. Das Verfahren (100) nach einem der vorhergehenden Ansprüche, wobei ein digitaler Zwilling der Maschine (1) anhand der Installationsvorgabe (200), insbesondere der Anlagenspezifikation, generiert und angezeigt wird, wobei die identifizierte Installationsvariante in dem angezeigten digitalen Zwilling dargestellt wird.

13. Ein System (2) für eine computer-gestützte Installation von räumlich dezentral angeordneten, elektrischen Komponenten einer Maschine (1), umfassend
eine Vorrichtung (30) zur Datenverarbeitung, umfassend Mittel zur Ausführung der Schritte des Verfahrens (100) nach einem der vorhergehenden Ansprüche;
einen Datenspeicher (33) für die Bereitstellung der Installationsvorgabe (200), wenigstens einer identifizierten Installationsvariante und der Anlagenspezifikation.

14. Ein Computerprogramm (20), umfassend Befehle, die bei der Ausführung des Computerprogramms (20) durch einen Computer (30) diesen veranlassen, die Schritte des Verfahrens (100) nach einem der Ansprüche 1 bis 12 auszuführen.

15. Eine Vorrichtung (30) zur Datenverarbeitung, umfassend Mittel zur Ausführung der Schritte des Verfahrens (100) nach einem der Ansprüche 1 bis 12.
